# EUROPÄISCHE PATENTSCHRIFT

(11) **EP 1 704 331 B1**
(45) Veröffentlichungstag und Bekanntmachung des Hinweises auf die Patenterteilung: **13.05.2009**
(21) Anmeldenummer: 04803703.0
(22) Anmeldetag: 10.12.2004
(51) Int. Cl.: F15B 1/24, F16L 55/04

(54) **KOLBENSPEICHER**
PISTON-TYPE ACCUMULATOR
ACCUMULATEUR DE TYPE PISTON

(30) Priorität: 16.01.2004 DE 102004002266
(43) Veröffentlichungstag der Anmeldung: 27.09.2006
(73) Patentinhaber: HYDAC TECHNOLOGY GMBH, D-66280 Sulzbach (DE)
(72) Erfinder: WEBER, Norbert, 66280 Sulzbach (DE)
(74) Vertreter: Bartels, Martin Erich Arthur
(86) Internationale Anmeldenummer: PCT/EP2004/014051
(87) Internationale Veröffentlichungsnummer: WO 2005/068848

(56) Entgegenhaltungen:
- EP-A- 0 261 293
- US-A- 5 363 744
- US-A- 5 992 948
- US-B1- 6 612 339
- PATENT ABSTRACTS OF JAPAN Bd. 2000, Nr. 15, 6. April 2001 (2001-04-06) -& JP 2000 346002 A (NOK CORP), 12. Dezember 2000 (2000-12-12)

## Beschreibung

Die Erfindung betrifft einen Kolbenspeicher gemäß der Merkmalsausgestaltung des Oberbegriffes des Patentanspruches 1.

Kolbenspeicher dieser Art sind in einer Vielzahl von Bauarten bekannt. Der den Trennkolben umgebende und axial führende Teil des Speichergehäuses hat im allgemeinen die Form eines Zylinderrohres, weshalb die Kolbenspeicher auch oft als Zylinderspeicher bezeichnet sind. Die Abdichtungsbereiche am Umfang des Kolbens sind üblicherweise durch Ring- oder O-Ring-Dichtungen gebildet, die in axial zueinander versetzten Außenumfangsnuten im Trennkolben eingelassen sind.

Für den Einsatz derartiger Zylinder- oder Kolbenspeicher werden hinsichtlich ihrer Funktionstüchtigkeit sehr hohe Anforderungen gestellt, und zwar über weite Temperaturbereiche, beispielsweise zwischen -40°C bis + 150°C. Bei einem Kolbenspeicher nach der DE 101 39 192 A1 wurde innerhalb des Speichergehäuses an einer zwischen den Abdichtungsbereichen des Trennkolbens gelegenen Stelle eine Entlüftungsmöglichkeit geschaffen zur Ableitung von die Abdichtungsbereiche überwindenden Leckmedien. Aufgrund der zwischen gasseitigem und fluidseitigem Abdichtungsbereich gelegenen Entlüftungsmöglichkeit ist bei der bekannten Lösung sichergestellt, dass kein Übertritt von Medien von der Gasseite zur Fluidseite oder umgekehrt erfolgen kann, so dass insoweit ein Kolbenspeicher geschaffen ist, der auch unter extremen Bedingungen und bei langen Einsatzzeiten seine Dichtigkeit beibehält.

Der aus einem Stahlwerkstoff bestehende Trennkolben baut in seiner axialen Bewegungsrichtung innerhalb des Speichergehäuses groß auf und ist von seinem Gewicht her als schwer zu bezeichnen. Aufgrund des damit einhergehenden masseträgen Bewegungsverhaltens des kolbenartigen Trennelementes ist der bekannte Hydro- oder Kolbenspeicher wenig geeignet für Anwendungsfälle, bei denen der Trennkolben in rascher Abfolge zu bewegen ist, beispielsweise in den Fällen, wo auf der Fluidseite hochfrequente Druckimpulse in den Speicher eingeleitet werden, und für solche Fälle, wo der Kolbenspeicher wenig Gewicht mit sich bringen soll, beispielsweise in Bereichen der Luft- und Raumfahrttechnik.

Um diesen Nachteilen zu begegnen, ist bei einem Kolbenspeicher nach der US-B1-6 612 339 bereits vorgeschlagen worden, den Trennkolben des Speichers überwiegend oder vollständig aus einem Kunststoffmaterial auszubilden, wobei der Trennkolben einen Hohlraum begrenzt, der vorzugsweise in Richtung der Gasseite des Speichergehäuses offen ist und der von der zylindrischen Innenwand des Trennkolbens seitlich begrenzt ist. Um die zylindrische Wand des Trennkolbens im Sinne einer Gewichtsoptimierung möglichst dünnwandig ausbilden zu können, sind bezogen auf die Längsachse des Trennkolbens diametral einander gegenüberliegende Versteifungsrippen eingebracht, die mit einem geringen Überstand über die zylindrische Innenwand des Trennkolbens zur Längsachse hin orientiert vorstehen.

Des weiteren befinden sich an dem zur Fluidseite hin orientierten Ende des Trennkolbens sternförmig von der Längsachse des Kolbens weg erstreckende, in Draufsicht gesehen tropfenförmige Ausnehmungen, die in der einen Anschlagstellung des Trennkolbens der Führung von Fluid dienen, das über in das Speichergehäuse eingebrachte Kanäle dem Fluidraum des Speichers zu- und abgeführt wird. Um die dahingehenden fluidführenden Kanäle in den Trennkolben einbringen zu können, weist dieser, auch aus Gründen der zusätzlichen Aussteifung , einen verdickten Abschlußboden auf. Trotz der getroffenen Maßnahmen ist mithin der Trennkolben bei der bekannten Lösung von seinem Gewicht her immer noch als schwer einzustufen und läßt insoweit, was kurze Ansteuerungszeiten anbelangt, noch Wünsche offen.

Ausgehend von diesem Stand der Technik liegt der Erfindung die Aufgabe zugrunde, unter Beibehalten der Vorteile der bekannten Kolbenspeicher diese dahingehend weiter zu verbessern, dass mit dem Trennkolben verkürzte Ansteuerungszeiten möglich sind und ein Speicher mit sehr wenig Einsatzgewicht realisiert ist. Eine dahingehende Aufgabe löst ein Kolbenspeicher mit den Merkmalen des Patentanspruches 1 in seiner Gesamtheit.

Dadurch, dass gemäß dem kennzeichnenden Teil des Patentanspruches 1 die Versteifungsstege sich von der Längsachse des Speichergehäuses zu der zylindrischen Innenwand des Trennkolbens erstrecken und dass die von der Innenwand abgekehrten Enden der Versteifungsstege in einen zylindrischen Aufnahmering oder in einen Verknüpfungspunkt im Inneren des Trennkolbens münden, läßt sich der Trennkolben von seinem Gewicht her ausgesprochen leicht auslegen, so dass insgesamt das Einbaugewicht des Kolbenspeichers reduziert ist. Dergestalt eignet sich der erfindungsgemäße Kolbenspeicher dann besonders gut für den Einsatz in Bereichen der Luft- und Raumfahrttechnik und für weitere Anwendungsgebiete, wo grundsätzlich Gewicht einzusparen ist. Da der zumindest teilweise aus Kunststoffmaterial aufgebaute Trennkolben eine ausgesprochen geringe Masse aufweist, läßt sich dieser leicht ansteuern und in der Bewegungsrichtung zeitlich rasch umkehren, so dass auch beim Eintrag von hochfrequenten Fluidpulsationen in das Speichergehäuse der Kolbenspeicher den damit verbundenen Anforderungen genügt, insbesondere im Hinblick auf eine Glättung des Pulsationsstromes und dergleichen mehr.

Dank der Versteifungsstege, die sich vom Zentrum des Trennkolbens nach außen hin strahlenförmig erstrecken, ist der genannte Abdichtbereich zur Innenwand des Speichergehäuses bezogen auf den Trennkolben versteift und die am Außenumfang des Trennkolbens vorgesehenen Dichtelemente sowie gegebenenfalls Führungsbänder werden in Anlage mit der Innenseite des Speichergehäuses gehalten, was insoweit gegenüber den bekannten Kolbenspeicherlösungen zu verbesserten Abdichtergebnissen führt.

Vorzugsweise ist dabei vorgesehen, dass zumindest Teile des Inneren des Trennkolbens aus einem Spritzgußteil bestehen oder durch ein Extrusionsverfahren erhalten sind, wobei nach außen hin zumindest teilweise eine Verstärkung aus Kunststoff-Fasern oder einem Kunststoffgelege aufgebracht ist. Dergestalt läßt sich in kostengünstiger Weise der Grundaufbau des Trennkolbens erreichen und durch das aufgebrachte Faser- oder Gelegelaminat an Kunststoff sind die notwendigen Festigkeitswerte für den Trennkolben erhalten, auch wenn dieser später hochfrequenten Pulsationen im Fluidbetrieb des Kolbenspeichers ausgesetzt sein sollte.

Bei einer besonders bevorzugten Ausführungsform des erfindungsgemäßen Kolbenspeichers besteht der Trennkolben aus glasfaserverstärktem Polyaryllamid. Das dahingehend eingesetzte Kunststoffmaterial hat im wesentlichen den gleichen Wärmeausdehnungskoeffizient wie der ansonsten im Stand der Technik für den Trennkolben eingesetzte Stahl und/oder des Stahlmaterials für das Speichergehäuse, und zwar in einem bevorzugten Temperaturbereich von 40°C bis 120°C, so dass insoweit dieselben Struktureigenschaften für den erfindungsgemäßen Trennkolben realisiert sind wie bei den bekannten Lösungen. Insbesondere ist der Kunststoff-Trennkolben formstabil, so dass sichergestellt ist, dass die am Außenumfang des Trennkolbens vorgesehenen Abdichtungsbereiche zwischen Trennkolben und Innenseite des Speichergehäuses sich nicht verändern, so dass mit der erfindungsgemäßen Kolbenspeicherlösung in hohem Maße das gewünschte dichte Speichersystem verwirklicht ist.

Im folgenden ist der erfindungsgemäße Kolbenspeicher anhand verschiedener Ausführungsbeispiele nach der Zeichnung näher erläutert. Dabei zeigen in prinzipieller und nicht maßstäblicher Darstellung die
- Fig.1: einen Längsschnitt durch den erfindungsgemäßen Kolbenspeicher mit einem innerhalb seines Speichergehäuses axial verfahrbaren Trennkolben;
- Fig.2a und 2b: einmal in Draufsicht, einmal im Längsschnitt nach der Linie II - II von Fig. 2a den in Fig.1 gezeigten Trennkolben;
- Fig.3a und 3b: einmal in Draufsicht, einmal im Längsschnitt nach der Linie III - III von Fig.3a eine geänderte Ausführungsform eines Trennkolbens, der anstelle des in der Fig.1 dargestellten Trennkolbens treten kann.

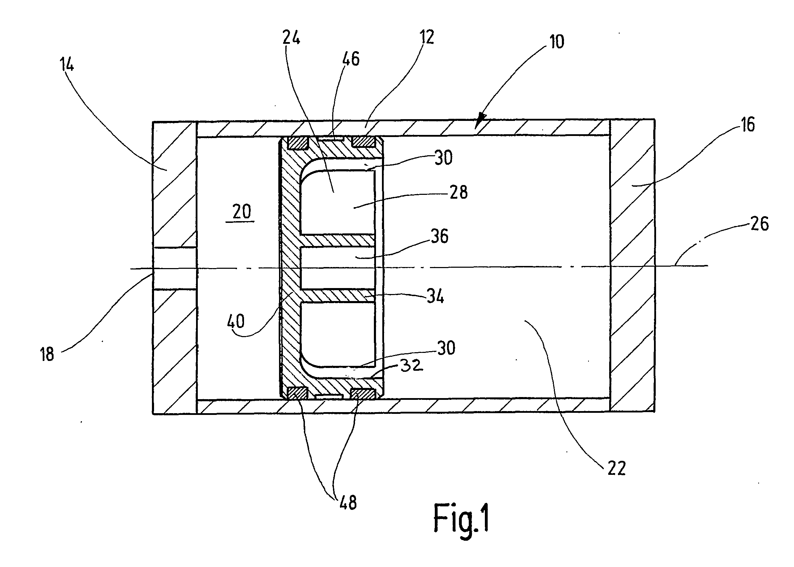

Der in der Fig.1 dargestellte Kolbenspeicher weist ein als Ganzes mit 10 bezeichnetes Speichergehäuse mit einem zylindrischen Mantel 12 (Zylinderrohr) auf, das endseitig von zwei Deckelteilen 14,16 abgeschlossen ist. Das in Blickrichtung auf die Fig.1 gesehen linke Deckelteil 14 weist einen Flüssigkeitsanschluß 18 auf, der es erlaubt, fluidführend den Kolbenspeicher an die nicht näher dargestellte Verrohrrung eines Hydrauliksystems anzuschließen, um dergestalt das Hydrauliksystem mit der Flüssigkeitsseite 20 des Kolbenspeichers zu verbinden. Das in Blickrichtung auf die Fig.1 gesehen rechte Deckelteil 16 schließt innerhalb des zylindrischen Mantels 12 einen Gasraum 22 ein, der beispielsweise mit Stickstoffgas befüllbar ist.

Zum Nachfüllen des Gasraumes 22, den man auch als die Gasseite des Kolbenspeichers bezeichnet, kann ein im Deckelteil 16 angeordnetes Nachfüllventil (nicht dargestellt) dienen. Zur Trennung der Flüssigkeitsseite 20 von der Gasseite 22 ist innerhalb des Speichergehäuses 10 mit seinem zylindrischen Mantel 12 ein Trennkolben 24 angeordnet, der in Abhängigkeit des Systemzustandes des Kolbenspeichers entlang dessen Längsachse 26 axial hin- und herfahrbar ist. Der dahingehende Aufbau eines Kolbenspeichers ist Stand der Technik, so dass an dieser Stelle hierauf nicht mehr näher eingegangen wird.

Im Gegensatz zu den bekannten Lösungen, bei denen der Trennkolben aus einem Stahlwerkstoff besteht, besteht die erfindungsgemäße Lösung bezogen auf den Trennkolben 24 überwiegend oder vorzugsweise vollständig aus einem Kunststoffmaterial. Der Trennkolben 24 kann insgesamt aus einem Kunststoff-Spritzgußteil gebildet sein oder mehrschichtig aufgebaut nach einem üblichen Extrusionsverfahren erhalten sein; besonders gute Festigkeitswerte für den Trennkolben 24 haben sich aber ergeben, sofern dieser auf seiner Innenseite dahingehend aufgebaut ist und nach außen hin ist eine Verstärkung aus Kunststoff-Fasern oder einem Kunststoffgelege in der Art eines Laminates aufgebracht. Als besonders günstig hat es sich erwiesen, den Trennkolben 24 aus glasfaserverstärktem Polyaryllamid aufzubauen, denn bei einem dahingehenden Aufbau verfügt der Trennkolben 24 im wesentlichen über den gleichen Wärmeausdehnungskoeffizienten wie das Stahlmaterial, aus dem insbesondere der zylindrische Mantel 12 des Speichergehäuses 10 gebildet ist nebst den genannten Deckelteilen 14,16. In dem bevorzugten Arbeits- oder Temperaturbereich des Speichers von ca. -40°C bis 120°C oder höher verhält sich somit der Trennkolben 24 wie sich das ihn umgebende Stahlmaterial mit der Folge, dass Abdichtprobleme grund möglicher Temperaturschwankungen im Material mit unterschiedlichen Ausdehnungskoeffizienten vermieden sind.

Wie des weiteren die Figuren ergeben, begrenzt der Trennkolben 24 einen Hohlraum 28, der in Richtung der Gasseite 22 des Speichergehäuses 10 hin offen ist. Auf diese Art und Weise läßt sich das Speichervermögen an Arbeitsgas innerhalb des Kolbenspeichers erhöhen und mithin seine Fähigkeit, Fluidstöße, eingebracht auf der Fluid- oder Flüssigkeitsseite 20 des Kolbenspeichers, zu dämpfen. Des weiteren reduziert das Anbringen des Hohlraumes 28 das Gewicht des sich bewegenden Trennkolbens 24, was auch der Reduzierung der Masseträgheit zugute kommt, so dass der erfindungsgemäße Trennkolben 24 in seinem Bewegungsverhalten sehr rasch ansteuerbar ist und insbesondere seine Bewegungsrichtung im Speichergehäuse 10 in Abhängigkeit des Betriebszustandes unmittelbar umkehren kann.

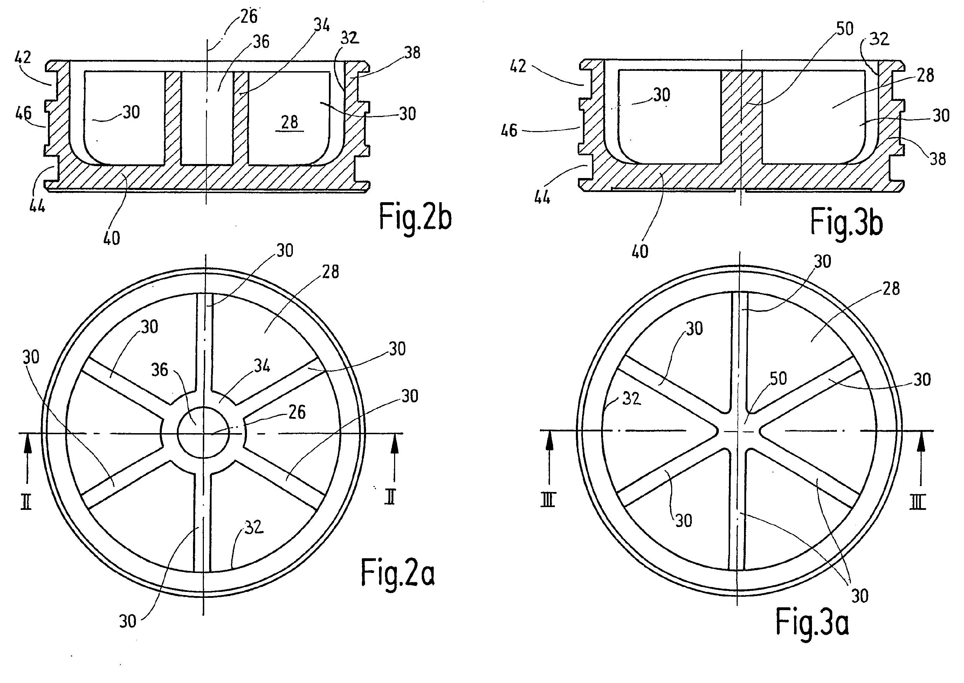

Innerhalb des Hohlraumes 28 sind Versteifungsstege 30 angeordnet, die diametral zur Längsachse 26 des Speichergehäuses 10 verlaufend sich von dieser zu der zylindrischen Innenwand 32 des Trennkolbens 24 erstrecken, die insoweit den Hohlraum 28 seitlich begrenzt. Aufgrund dieser Aussteifung über die Versteifungsstege 30 kann der Trennkolben 24 von seinem Gewicht her sehr leicht aufbauen und ist dennoch für die anstehenden Bearbeitungsaufgaben hochfest ausgelegt, wozu die bereits erwähnte Glasfaserverstärkung mit beiträgt. Bei den beiden in den Fig. 2 und 3 gezeigten Ausführungsformen sind jeweils insgesamt sechs Versteifungsstege 30 vorgesehen, die in Abhängigkeit von den auftretenden Kräften von ihrer Anzahl her auch entsprechend erhöht oder verringert werden können. Bei der in den Fig. 1 und 2 dargestellten Ausführungsform münden die von der Innenwand 32 abgekehrten Enden der Versteifungsstege 30 in einen zylindrischen Aufnahmering 34 im Inneren des Trennkolbens 24, was zu einer Erhöhung der Steifigkeit des Gesamtsystems führt, da die freie Weglänge der Versteifungsstege 30, an denen sie unter Last ausknicken könnten, entsprechend reduziert ist. Im Sinne der Leichtbauweise verfügt wiederum der Aufnahmering 34 über eine zylindrische Mittenausnehmung 36, die koaxial zur Längsachse 26 des Speichergehäuses 10 sowie des Trennkolbens 24 verläuft. Die Versteifungsstege 30 sind im Querschnitt rechteckförmig ausgebildet und erstrecken sich über die gesamte Höhe des Hohlraumes 28, so dass der Außenring 38 des Trennkolbens 24 über seine gesamte axiale Verfahrlänge ausgesteift ist, wozu das Bodenteil 40 mit beiträgt, auf das sich in axialer Verfahrrichtung gesehen sowohl die Versteifungsstege 30 endseitig abstützen als auch der Aufnahmering 34.

Des weiteren weist der Trennkolben 24 entlang seines Außenringes 38 nutartige Ausnehmungen 42,44 und 46 auf, wobei die Ausnehmungen 42 und 44 der Aufnahme von Dichtungen 48 dienen, insbesondere gebildet aus einem Dichtring, bestehend aus Elastomermaterial. Die dazwischenliegende Ausnehmung 46 kann der Aufnahme eines nicht näher dargestellten Führungsbandes dienen, um dergestalt die Längsverfahrbewegung des Trennkolbens 24 an der Innenumfangsseite des zylindrischen Mantels 12 zu erleichtern. Die Führung kann auch als Ring angespritzt werden, wobei in einem speziellen Herstellungsprozeß auch unterschiedliches Material in der Form zusammengespritzt werden kann. Dadurch kann spezielles Material mit besonderen Gleiteigenschaften für die Führung verwendet werden.

Die in den Fig.3a,3b dargestellte geänderte Ausführungsform entspricht weitestgehend der Ausführungsform nach den Fig.1 und 2, wobei nur anstelle des Aufnahmeringes 34 mit zentrischer Mittenausnehmung 36 ein Verknüpfungspunkt 50 für die von dort aus sternförmig verlaufenden Versteifungsstege 30 vorgesehen ist.

## Patentansprüche

1. Kolbenspeicher mit einem innerhalb eines Speichergehäuses (10) axial verfahrbaren Trennkolben (24), der zwei Räume innerhalb des Speichergehäuses (10) voneinander trennt, nämlich eine Gasseite (22) von einer Flüssigkeitsseite (20) des Speichers, wobei der Trennkolben (24) überwiegend oder vollständig aus einem Kunststoffmaterial besteht, wobei der Trennkolben (24) einen Hohlraum (28) begrenzt, der in Richtung der Gasseite (22) des Speichergehäuses (10) hin offen ist und der von der zylindrischen Innenwand (32) des Trennkolbens (24) seitlich begrenzt ist, und wobei innerhalb des Hohlraumes (28) Versteifungsstege (30) vorhanden sind, die diametral zur Längsachse (26) des Speichergehäuses angeordnet sind, **dadurch gekennzeichnet, dass** die Versteifungsstege (30) sich von der Längsachse (26) des Speichergehäuses (10) zu der zylindrischen Innenwand (32) des Trennkolbens (24) erstrecken und dass die von der Innenwand (32) abgekehrten Enden der Versteifungsstege (30) in einen zylindrischen Aufnahmering (34) oder in einen Verknüpfungspunkt (50) im Inneren des Trennkolbens (24) münden.

2. Kolbenspeicher nach Anspruch 1, **dadurch gekennzeichnet, dass** zumindest Teile des Inneren des Trennkolbens (24) aus einem Spritzgußteil bestehen oder durch ein Extrusionsverfahren erhalten sind, und dass nach außen hin zumindest teilweise eine Verstärkung aus Kunststoff-Fasern oder einem Kunststoffgelege aufgebracht ist.

3. Kolbenspeicher nach Anspruch 2, **dadurch gekennzeichnet, dass** der Trennkolben (24) aus glasfaserverstärktem Polyaryllamid besteht.

4. Kolbenspeicher nach einem der Ansprüche 1 bis 3, **dadurch gekennzeichnet, dass** die Versteifungsstege (30) im Querschnitt rechteckförmig ausgebildet sind und sich über die gesamte Höhe des Hohlraumes (28) innerhalb des Trennkolbens erstrecken.

5. Kolbenspeicher nach einem der Ansprüche 1 bis 4, **dadurch gekennzeichnet, dass** der Trennkolben (24) außenumfangsseitig nutartige Ausnehmungen (42,44,46) aufweist, die der Aufnahme von Führungsbändern und/oder Dichtungen (48) dienen.

## Claims

1. The piston-type accumulator having a separator piston (24) moveable axially within an accumulator housing (10), which separates two chambers within the accumulator housing (10) from one another, namely a gas side (22) from a fluid side (20) of the accumulator, the separator piston (24) being made predominantly or totally of a synthetic material, the separator piston (24) defining a cavity (28) which is open towards the gas side (22) of the accumulator housing (10) and which is defined to the side by the cylindrical inner wall (32) of the separator piston (24), and within the cavity (28) reinforcement bars (30) being provided which are disposed diametrically to the longitudinal axis (26) of the accumulator housing, **characterised in that** the reinforcement bars (30) extend from the longitudinal axis (26) of the accumulator housing (10) to the cylindrical inner wall (32) of the separator piston (24) and that the ends of the reinforcement bars (30) facing away from the inner wall (32) open out into a cylindrical retaining ring (34) or into a connection point (50) within the separator piston (24).

2. The piston-type accumulator according to Claim 1, **characterised in that** at least parts of the interior of the separator piston (24) are made from a die cast component or are obtained by an extrusion process, and that towards the outside a reinforcement of synthetic fibres or a synthetic layering is at least partially applied.

3. The piston-type accumulator according to Claim 2, **characterised in that** the separator piston (24) is made of glass fibre-reinforced polyarylamide.

4. The piston-type accumulator according to any of Claims 1 to 3, **characterised in that** the reinforcement bars (30) have a rectangularly shaped cross-section and extend over the whole height of the cavity (28) within the separator piston.

5. The piston-type accumulator according to any of Claims 1 to 4, **characterised in that** the separator piston (24) has groove-type recesses (42, 44, 46) on the outer periphery side which serve to accommodate guiding bands and/or seals (48).

## Revendications

1. Accumulateur à piston, comprenant un piston (24) de séparation qui peut être déplacé axialement dans un corps (10) d'accumulateur et qui sépare l'une de l'autre deux chambres à l'intérieur du corps (10) de l'accumulateur, à savoir un côté (22) gaz d'un côté (20) liquide de l'accumulateur, le piston (24) de séparation étant d'une manière prépondérante ou complètement en une matière plastique, le piston (24) de séparation délimitant un espace (28) creux qui est ouvert dans la direction du côté (22) gaz du corps (10) de l'accumulateur et qui est délimité latéralement par la paroi (32) intérieure cylindrique du piston (24) de séparation, et dans lequel il y a à l'intérieur de l'espace (28) creux des entretoises (30) de renfort, qui sont disposées diamétralement par rapport à l'axe (26) longitudinal du corps de l'accumulateur, **caractérisé en ce que** les entretoises (30) de renfort s'étendent de l'axe (26) longitudinal du corps (10) de l'accumulateur à la paroi (32) intérieure cylindrique du piston (24) de séparation et **en ce que** les extrémités des entretoises (30) de renfort éloignées de la paroi (32) intérieure débouchent dans un anneau (34) cylindrique de réception ou en un point (50) de réunion à l'intérieur du piston (24) de séparation.

2. Accumulateur à piston suivant la revendication 1, **caractérisé en ce qu'**au moins des parties de l'intérieur du piston (24) de séparation sont en une pièce moulée par injection ou sont obtenues par un procédé d'extrusion et **en ce que** au moins en partie un renfort en fibres de matière plastique ou un revêtement en matière plastique est déposé vers l'extérieur.

3. Accumulateur à piston suivant la revendication 2, **caractérisé en ce que** le piston (24) de séparation est en polyarylamide renforcé par de la fibre de verre.

4. Accumulateur à piston suivant l'une des revendications 1 à 3, **caractérisé en ce que** les entretoises (30) de renfort ont une section transversale rectangulaire et s'étendent sur toute la hauteur de l'espace (28) creux à l'intérieur du piston de séparation.

5. Accumulateur à piston suivant l'une des revendications 1 à 4, **caractérisé en ce que** le piston (24) de séparation a du côté de la périphérie extérieure des évidements (42, 44, 46) de type à rainure, qui servent à recevoir des bandes de guidage et/ou des garnitures (48) d'étanchéité.
